# EUROPEAN PATENT APPLICATION

(11) **EP 4 664 316 A1**
(43) Date of publication of application: **17.12.2025**
(21) Application number: 23924891.7
(22) Date of filing: 31.08.2023
(51) Int. Cl.: G06F 16/27

(54) **LOG SYNCHRONIZATION METHOD AND APPARATUS, ELECTRONIC DEVICE, AND STORAGE MEDIUM**

(30) Priority: 28.02.2023 CN 202310232100
(71) Applicant: Huawei Technologies Co., Ltd., Shenzhen, Guangdong 518129 (CN)
(72) Inventor: CAO, Yu, Shenzhen, Guangdong 518129 (CN); WANG, Wei, Shenzhen, Guangdong 518129 (CN)
(74) Representative: Isarpatent
(86) International application number: PCT/CN2023/116212
(87) International publication number: WO 2024/178935

(57) **Abstract**

This application provides a log synchronization method and apparatus, an electronic device, and a storage medium, and pertains to the field of database technologies. The method includes: A storage system stores a log of an active node. The storage system receives a log synchronization request from a standby node, generates a differential log based on the log synchronization request and the log, and sends the differential log to the standby node. In the foregoing method, because the storage system stores the log written by the active node, and the active node and the standby node access a same log, the active node does not need to replicate or transmit the log. In this way, inconsistency that occurs in a log replication process can be avoided, and replication mode degradation caused by a network jitter between the active node and the standby node can be avoided, to reduce a data loss risk.

## Description

This application claims priority to Chinese Patent Application No. 202310232100.6, filed on February 28, 2023 and entitled "LOG SYNCHRONIZATION METHOD AND APPARATUS, ELECTRONIC DEVICE, AND STORAGE MEDIUM", which is incorporated herein by reference in its entirety.

### TECHNICAL FIELD

This application relates to the field of database technologies, and in particular, to a log synchronization method and apparatus, an electronic device, and a storage medium.

### BACKGROUND

In consideration of high reliability and high stability of services, an active/standby form may be used by a database system for networking. To be specific, the database system includes an active node and a standby node. Based on this networking form, a semi-synchronous log replication mode may be used during log synchronization between the active node and the standby node.

The semi-synchronous log replication mode is as follows: After performing an operation, the active node replicates a log, and sends the replicated log to a plurality of standby nodes. After receiving the log, the standby nodes synchronize the log, and send synchronization completion messages to the active node after the synchronization is completed. After receiving the synchronization completion message sent by any one of the standby nodes, the active node returns an operation result to a client.

However, in the foregoing method, when a network jitter or network stress is excessively high, the standby node may respond slowly. When the active node does not receive the synchronization completion message from the standby node within specific duration, the active node directly returns the operation result to a terminal without waiting for a response from the standby node. In other words, the semi-synchronous log replication mode is switched to an asynchronous log replication mode. This leads to data inconsistency between the active node and the standby node or even a data loss, and stability and reliability of the services are affected.

### SUMMARY

Embodiments of this application provide a log synchronization method and apparatus, an electronic device, and a storage medium, to avoid data inconsistency between an active node and a standby node, and improve stability and reliability of a database system. The technical solutions are as follows:

According to a first aspect, a log synchronization method is provided. The method is performed by a storage system in a database system. The database system includes an active node, a standby node, and the storage system. The method includes:
The storage system stores a log of the active node, where the log indicates an operation performed by the active node.

The storage system receives a log synchronization request from the standby node, generates a differential log based on the log synchronization request and the log, and sends the differential log to the standby node, where the differential log indicates an operation not performed by the standby node.

The storage system may be an independent storage device, or may be a storage array including a plurality of storage devices. The storage device may be any storage device, for example, a network attached storage (NAS) or a storage area network (SAN). The log of the active node is for recording the operation performed by the active node. The differential log is a log that has not been synchronized by the standby node.

In the foregoing method, because the storage system stores the log written by the active node, and the active node and the standby node access a same log, the active node does not need to replicate or transmit the log. In this way, inconsistency that occurs in a log replication process can be avoided, and replication mode degradation caused by a network jitter between the active node and the standby node can be avoided, to reduce a data loss risk.

Optionally, the storage system includes a first storage device and a second storage device that belong to different regions. That the storage system stores the log of the active node includes:
The first storage device stores the log. The first storage device and the second storage device perform log synchronization.

The first storage device and the active node belong to a same region, and the second storage device and the standby node belong to a same region. "Belonging to" may mean that a position of the device is in the region, or may mean that the device has a binding relationship with the region and the device provides a service for the node in the region. The log synchronization between the first storage device and the second storage device may be initiated by the first storage device, or may be initiated by the second storage device.

In the foregoing method, the log of the active node is stored by the storage device that belongs to the same region as the active node, so that efficiency of storing the log in the storage device by the active node can be improved, a storage delay and a data loss caused by long-distance data transmission are avoided, and the log of the active node can be stored in a timely manner, to improve reliability and a disaster recovery capability of the database system.

Optionally, the standby node and the second storage device belong to a same region. That the storage system receives the log synchronization request from the standby node, generates the differential log based on the log synchronization request and the log, and sends the differential log to the standby node includes:
The second storage device receives the log synchronization request from the standby node, generates the differential log based on the log synchronization request and the log, and sends the differential log to the standby node.

In the foregoing method, the standby node sends the log synchronization request to the storage device that belongs to the same region as the standby node, so that transmission time of the request can be reduced, to improve efficiency of the log synchronization. In this way, the standby node can complete the log synchronization in a timely manner, to help improve the reliability and the disaster recovery capability of the database system.

Optionally, the method further includes:
The storage system writes the differential log into a relay log of the standby node based on a write operation of the standby node on the differential log.

The relay log is for storing the differential log of the standby node. In the foregoing method, because the relay log of the standby node is stored in the storage system, storage resources of the standby node can be saved. In addition, because the storage system has high reliability, a possibility of a data damage or loss is low when the relay log is stored in the storage system, and reliability of the log synchronization can be improved.

Optionally, the method further includes:
The active node stores the log in the storage system.

In the foregoing method, because the active node is configured to perform a read/write operation and store the log in the storage system, the active node achieves separation of storage and computation. In this way, storage resources of the active node are saved, to help improve computing performance of the active node.

Optionally, the method further includes any one of the following manners:
The standby node receives the differential log and writes the differential log into a relay log stored in the standby node.

The standby node receives the differential log and writes the differential log into a relay log that is of the standby node and that is stored in the storage system.

When the active node and the standby node belong to a same region, the standby node may write the differential log into the relay log stored locally, or write the differential log into the relay log in the storage system. When the active node and the standby node belong to different regions, the standby node may write the differential log into the local relay log of the device, or write the differential log into the relay log in the storage device associated with the standby node.

In the foregoing method, the relay log of the standby node is stored in the storage system, so that the storage resources of the standby node can be saved. The relay log of the standby node is stored locally in the device for the convenience of reading, so that efficiency of performing log synchronization by the standby node based on the relay log is improved.

According to a second aspect, a log synchronization apparatus is provided. The apparatus is used in a storage system in a database system. The database system includes an active node, a standby node, and the storage system. The apparatus includes at least one functional module, and the at least one functional module is configured to perform the log synchronization method provided in any one of the first aspect or the possible implementations of the first aspect.

According to a third aspect, a storage device is provided. The storage device includes a memory and a processor.

The processor is configured to execute instructions stored in the memory, to enable the storage device to perform the steps performed by the storage system in the log synchronization method provided in any one of the first aspect or the possible implementations of the first aspect.

According to a fourth aspect, a storage system is provided. The storage system includes at least one storage device, and each storage device includes a memory and a processor.

The processor of the at least one storage device is configured to execute instructions stored in the memory of the at least one storage device, to enable the storage device to perform the steps performed by the storage system in the log synchronization method provided in any one of the first aspect or the possible implementations of the first aspect.

According to a fifth aspect, an electronic device is provided. The electronic device includes a processor and a memory.

The processor is configured to execute instructions stored in the memory, to enable the electronic device to perform the steps performed by the active node or the steps performed by the standby node in the log synchronization method provided in any one of the first aspect or the possible implementations of the first aspect.

According to a sixth aspect, a computer program product including instructions is provided. When the instructions are run by a storage device, the storage device is enabled to perform the steps performed by the storage system in the log synchronization method provided in any one of the first aspect or the possible implementations of the first aspect. Alternatively, when the instructions are run by a storage system, the storage system is enabled to perform the steps performed by the storage system in the log synchronization method provided in any one of the first aspect or the possible implementations of the first aspect.

According to a seventh aspect, a computer program product including instructions is provided. When the instructions are run by an electronic device, the electronic device is enabled to perform the steps performed by the active node or the steps performed by the standby node in the log synchronization method provided in any one of the first aspect or the possible implementations of the first aspect.

According to an eighth aspect, a computer-readable storage medium is provided. The computer-readable storage medium includes computer program instructions. When the computer program instructions are executed by a storage device, the storage device performs the steps performed by the storage system in the log synchronization method provided in any one of the first aspect or the possible implementations of the first aspect. Alternatively, when the computer program instructions are executed by a storage system, the storage system performs the steps performed by the storage system in the log synchronization method provided in any one of the first aspect or the possible implementations of the first aspect.

According to a ninth aspect, a computer-readable storage medium is provided. The computer-readable storage medium includes computer program instructions. When the computer program instructions are executed by an electronic device, the electronic device performs the steps performed by the active node or the steps performed by the standby node in the log synchronization method provided in any one of the first aspect or the possible implementations of the first aspect.

### BRIEF DESCRIPTION OF DRAWINGS

FIG. 1 is a diagram of a structure of a database system according to an embodiment of this application;
FIG. 2 is a flowchart of a log synchronization method according to an embodiment of this application;
FIG. 3 is a diagram of a log synchronization method according to an embodiment of this application;
FIG. 4 is a flowchart of a log synchronization method according to an embodiment of this application;
FIG. 5 is a flowchart of a log synchronization method according to an embodiment of this application;
FIG. 6 is a diagram of a log synchronization method according to an embodiment of this application;
FIG. 7 is a flowchart of a log synchronization method according to an embodiment of this application;
FIG. 8 is a block diagram of a structure of a log synchronization apparatus according to an embodiment of this application;
FIG. 9 is a diagram of a structure of a storage device according to an embodiment of this application;
FIG. 10 is a diagram of a storage system according to an embodiment of this application; and
FIG. 11 is a diagram of a possible implementation of a storage system according to an embodiment of this application.

### DESCRIPTION OF EMBODIMENTS

To make objectives, technical solutions, and advantages of this application clearer, the following further describes implementations of this application in detail with reference to the accompanying drawings.

First, an implementation environment of embodiments of this application is described.

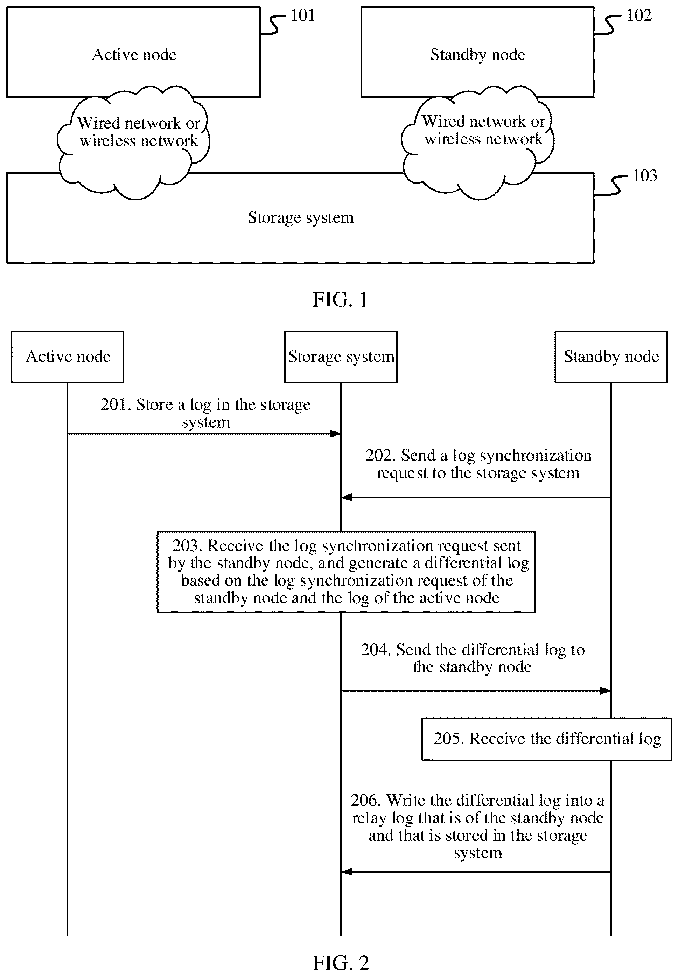

FIG. 1 is a diagram of a structure of a database system according to an embodiment of this application. As shown in FIG. 1, the database system includes a plurality of active nodes 101, a standby node 102, and a storage system 103. The active node 101 provides a data read/write (read/write, RW) service for the outside. To be specific, a client may perform a read/write operation on data in the database system via the active node, and the active node records a performed operation in a log (binlog). The standby node 102 provides a data read (read, R) service for the outside, and synchronizes the log of the active node 101, to synchronize data of the active node 101. Therefore, after a fault occurs in the active node 101, the standby node 102 can take over the active node 101 and provide the data read/write service for the outside. The standby node 102 has a log (relay log) of the standby node 102, and the relay log is for storing a log (that is, a differential log) of the active node that is to be synchronized by the standby node 102. The storage system 103 can provide a data storage service for the database system, for example, store the log of the active node 101 and the relay log of the standby node 102. The storage system 103 includes at least one storage device.

The active node 101 and the standby node 102 may be independent physical servers, or may be server clusters including a plurality of physical servers, or may be cloud servers that provide basic cloud computing services such as a cloud service, a cloud database, cloud computing, a cloud function, cloud storage, a network service, cloud communication, a middleware service, a domain name service, a security service, a content delivery network (content delivery network, CDN), and a big data and artificial intelligence platform. The storage system 103 may be a network attached storage (network attached storage, NAS), a storage area network (storage area network, SAN), or the like. This is not limited in embodiments of this application.

The active node 101 and the standby node 102 may be in a communication connection with the storage system 103 through a wired network or a wireless network. In some embodiments, the wireless network or the wired network uses a standard communication technology and/or protocol. The network is usually an internet, but may alternatively be any network, including but not limited to any combination of a local area network (LAN), a metropolitan area network (MAN), a wide area network (WAN), a mobile network, a wired network, a wireless network, a private network, or a virtual private network. In some embodiments, peer-to-peer (P2P) communication is implemented between the active node 101, the standby node 102, and the storage system 103 based on a remote procedure call (RPC). In some embodiments, technologies and/or formats including a hypertext markup language (HTML), an extensible markup language (XML), and the like are used by the active node 101, the standby node 102, and the storage system 103 to represent data blocks exchanged through a network. In addition, all or some links can be encrypted by using conventional encryption technologies such as a secure socket layer (SSL), transport layer security (TLS), a virtual private network (VPN), and internet protocol security (IPsec). In some other embodiments, customized and/or dedicated data communication technologies can be further used to replace or supplement the foregoing data communication technologies.

The foregoing describes the implementation environment of embodiments of this application. The following describes a log synchronization method provided in embodiments of this application. The method is performed by the database system shown in FIG. 1, and the database system includes an active node, a standby node, and a storage system. In the method, the active node stores a log in the storage system, and the standby node sends a log synchronization request to the storage system. After receiving the log synchronization request, the storage system generates a differential log of the standby node, and sends the differential log to the standby node. This process may be understood as that the storage system provides a log synchronization service for the standby node. After receiving the differential log, the standby node writes the differential log into a relay log of the standby node, to complete log synchronization.

The foregoing describes a basic process in embodiments of this application. The following describes a specific process in embodiments of this application. Specific processes in embodiments of this application vary in different scenarios.

In a scenario in which the active node and the standby node belong to a same region (availability zone, AZ), the active node and the standby node share a storage device. The relay log of the standby node may be stored in the shared storage device, to save storage resources of the standby node. Alternatively, the relay log of the standby node may be stored locally in the device for the convenience of reading, so that efficiency of performing log synchronization by the standby node based on the relay log is improved.

In a scenario in which the active node and the standby node do not belong to a same region, the active node and the standby node are each associated with a storage device in the storage system, and the node and the associated device belong to a same region. Log synchronization is first completed between the active node and the storage device associated with the standby node, and then the storage device associated with the standby node provides a log synchronization service for the standby node. Further, in this scenario, a relay log of the standby node may be stored in the storage device associated with the standby node, or may be stored locally in the device. In the foregoing content, "belonging to" may mean that a position of the device is in the region, or may mean that the device has a binding relationship with the region and the device provides a service for the node in the region.

The following separately describes four embodiments in the foregoing two scenarios in detail.

First, an example in which the active node and the standby node belong to a same region and the relay log of the standby node is stored in the storage system is used for description. FIG. 2 is a flowchart of a log synchronization method according to an embodiment of this application. As shown in FIG. 2, the method is performed by a database system. The database system includes an active node, a standby node, and a storage system. The method includes the following step 201 to step 206.

201. The active node stores a log in the storage system, where the log indicates an operation performed by the active node.

The log is for recording operations of changing a database table structure and modifying table data that are performed by the active node. The log may be a binlog, a write-ahead log (write-ahead log), or the like. This is not limited in embodiments of this application. The storage system may be an independent storage device, or may be a storage array including a plurality of storage devices. The storage device may be a network attached storage (network attached storage, NAS), a storage area network (storage area network, SAN), or the like. A quantity and types of storage devices are not limited in embodiments of this application.

The active node links a file system of the storage system to a file system of the active node. In this way, the active node can access, by accessing the file system of the active node, data stored in the storage system, to read and write the log stored in the storage system. In other words, in this process, the active node mounts (mounts) the log to the storage system.

In the foregoing method, because the active node is configured to perform a read/write operation and store the log in the storage system, the active node achieves separation of storage and computation. In this way, storage resources of the active node are saved, to help improve computing performance of the active node.

202. The standby node sends a log synchronization request to the storage system.

The log synchronization request carries an identifier of the standby node and a log position that the standby node has already synchronized to. In other words, the log position synchronized to is a log position synchronized to in a previous log synchronization process, and indicates a part of the log that has not been synchronized. The log synchronization request is for requesting, from the storage system, a log that has not been synchronized, that is, a differential log of the standby node. The standby node starts an I/O thread and sends the log synchronization request to the storage system through the I/O thread.

In some embodiments, the standby node sends the log synchronization request to the storage system periodically or at scheduled time. Time between two adjacent synchronization requests may be set based on an actual requirement. When the time between the two adjacent synchronization requests is short, the standby node can complete synchronization with the active node in a timely manner, to improve reliability and availability of the system.

In some other embodiments, after performing an operation, the active node actively sends a message to the standby node, to prompt the standby node to perform log synchronization. The active node may send a message to the standby node each time an operation is performed, to ensure real-time synchronization between the active node and the standby node, and avoid a case in which the standby node sends the log synchronization request to the storage system when no operation is performed by the active node. In this way, invalid log synchronization operations of the standby node are reduced, to reduce stress of the standby node, and save data transmission resources. Alternatively, the active node may send a message to the standby node after performing a target quantity of operations. This reduces frequent log synchronization operations of the standby node, and improves efficiency of performing log synchronization by the standby node.

In the foregoing method, because a process in which the standby node sends the log synchronization request to the storage system to perform log synchronization is consistent with a process in which the standby node sends the log synchronization request to the active node, the standby node can directly obtain, without modifying the standby node, the differential log from the storage system by using a simple configuration. In this way, deployment costs of the solution can be reduced, and practicability of the solution is improved.

203. The storage system receives the log synchronization request sent by the standby node, and generates the differential log based on the log synchronization request of the standby node and the log of the active node, where the differential log indicates an operation not performed by the standby node.

The differential log is a log that has not been synchronized by the standby node. The storage system locates a log position in the log of the active node based on the log position carried in the log synchronization request from the standby node, and reads a log after the log position, to generate the differential log.

204. The storage system sends the differential log to the standby node.

205. The standby node receives the differential log.

206. The standby node writes the differential log into a relay log that is of the standby node and that is stored in the storage system.

The relay log (relay log) of the standby node is for storing the differential log of the standby node. The standby node links the file system of the storage system to a file system of the standby node. In this way, the standby node can access, by accessing the file system of the standby node, data stored in the storage system, to read and write the relay log stored in the storage system. In other words, in this process, the standby node mounts the relay log to the storage system. After the standby node receives the differential log, through the I/O thread of the standby node, the differential log is read, and a write operation is performed on the differential log. The storage system writes, based on the write operation of the standby node on the differential log, the differential log into the relay log of the standby node stored in the storage system. The standby node records a log position synchronized to in this time of synchronization, and the log position is used as a reference position for a next time of log synchronization.

In the foregoing method, because the relay log of the standby node is stored in the storage system, storage resources of the standby node can be saved. In addition, because the storage system has high reliability, a possibility of a data damage or loss is low when the relay log is stored in the storage system, and reliability of the log synchronization can be improved.

In some embodiments, after writing the differential log into the relay log, the standby node starts an SQL thread. Through the SQL thread, the differential log is read from the relay log, and an operation corresponding to the read differential log is performed. In other words, the differential log is replayed. In this way, the operation performed by the active node is synchronized, to implement the synchronization between the active node and the standby node.

In some embodiments, mutual switching between the active node and the standby node that belong to a same region can be implemented. To be specific, in embodiments of this application, active/standby switchover within an AZ is supported. When a fault occurs in the active node, the standby node can take over work of the active node in a timely manner. In this way, a disaster recovery capability of the database system can be improved, to improve stability and reliability of the database system.

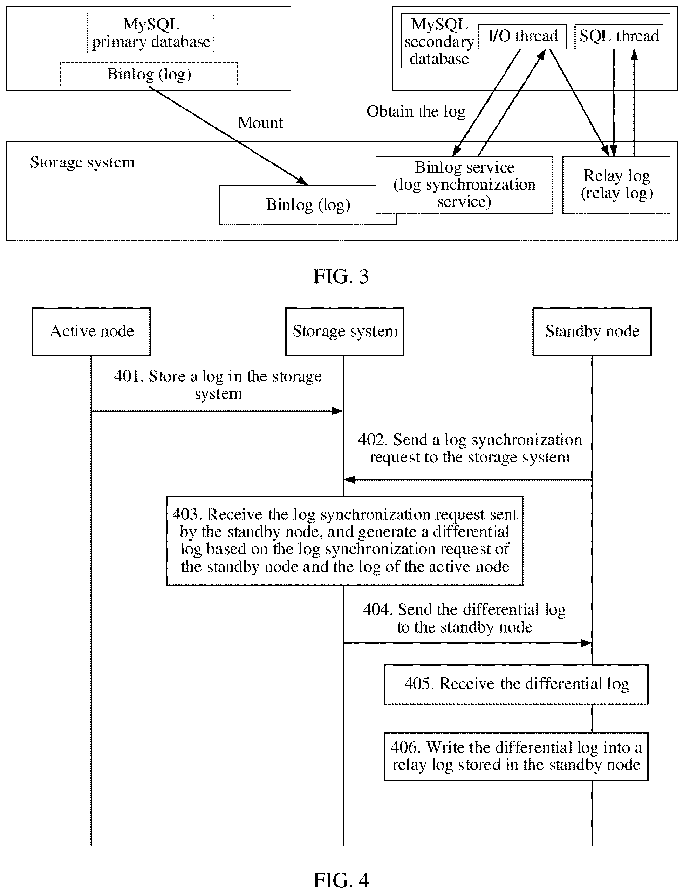

The following describes the process shown in step 201 to step 205 by using FIG. 3 as an example. FIG. 3 is a diagram of a log synchronization method according to an embodiment of this application. As shown in FIG. 3, a MySQL database is used as an example. A MySQL primary database is run on an active node, a MySQL secondary database is run on a standby node, and the active node and the standby node share a storage system. The active node writes a log (binlog) into the storage system. The storage system can provide a log synchronization service (binlog service). The standby node sends a log synchronization request to the storage system through an I/O thread, to obtain a differential log, and writes the obtained differential log into a relay log (relay log) of the standby node in the storage system. The standby node reads the differential log from the relay log through an SQL thread and replays the read differential log, to synchronize an operation performed by the active node. It should be noted that the MySQL database in FIG. 3 is merely an example. The log synchronization method provided in this embodiment of this application is also applicable to any database such as openGauss and PostgreSQL. This is not limited in embodiments of this application.

In the foregoing method, the active node writes the log into the storage system shared with the standby node, and the storage system can send the differential log to the standby node after receiving the log synchronization request from the standby node, to complete log synchronization. Because the active node directly writes the log into the storage system, and the active node and the standby node access a same log, the active node does not need to replicate or transmit the log. This process may be understood as that the log synchronization service is offloaded from a node side to a storage side. In this way, inconsistency that occurs in a log replication process can be avoided, and replication mode degradation caused by a network jitter between the active node and the standby node can be avoided, to reduce a data loss risk. In addition, the relay log of the standby node is stored in the storage system, so that storage resources of the standby node can be saved. In addition, because the storage system has high reliability, a possibility of a data damage or loss is low when the relay log is stored in the storage system, and reliability of the log synchronization and stability of the database system can be improved.

An example in which the active node and the standby node belong to a same region and the relay log of the standby node is stored locally in the device is used below for description. FIG. 4 is a flowchart of a log synchronization method according to an embodiment of this application. As shown in FIG. 4, the method is performed by a database system. The database system includes an active node, a standby node, and a storage system. The method includes the following step 401 to step 406.

401. The active node stores a log in the storage system, where the log indicates an operation performed by the active node.

402. The standby node sends a log synchronization request to the storage system.

403. The storage system receives the log synchronization request sent by the standby node, and generates a differential log based on the log synchronization request of the standby node and the log of the active node, where the differential log indicates an operation not performed by the standby node.

404. The storage system sends the differential log to the standby node.

405. The standby node receives the differential log.

406. The standby node writes the differential log into a relay log stored in the standby node.

Step 401 to step 406 are similar to step 201 to step 206. A difference lies in that in step 406, the relay log of the standby node is stored in the standby node, and similarities are not described again.

In the foregoing method, the active node writes the log into the storage system shared with the standby node, and the storage system can send the differential log to the standby node after receiving the log synchronization request from the standby node, to complete log synchronization. Because the active node directly writes the log into the storage system, and the active node and the standby node access a same log, the active node does not need to replicate or transmit the log. In this way, inconsistency that occurs in a log replication process can be avoided, and replication mode degradation caused by a network jitter between the active node and the standby node can be avoided, to avoid a data loss risk. In addition, the relay log of the standby node is stored in the standby node, so that efficiency of reading the differential log by the standby node from the relay log can be improved, to reduce a delay of the synchronization between the active node and the standby node, and improve efficiency of the synchronization between the active node and the standby node.

It should be noted that the foregoing embodiments shown in FIG. 2 and FIG. 4 are respectively described by using an example in which the storage system stores the relay log and an example in which the standby node stores the relay log. In some embodiments, both the standby node and the storage system store the relay log of the standby node. After receiving the differential log, the standby node separately writes the differential log into the local relay log of the device and the relay log in the storage system. During the log synchronization, the standby node may quickly read the differential log in the relay log from the device locally, to ensure reading efficiency. In addition, because a backup is also stored in the storage system, it is ensured that the standby node can complete data synchronization, and reliability of relay log storage can be further ensured.

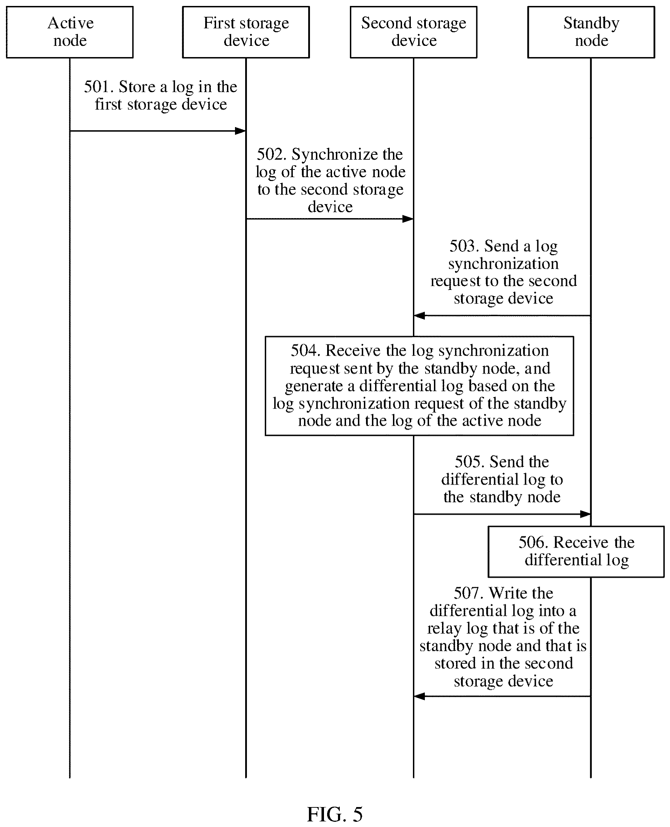

An example in which the active node and the standby node do not belong to a same region and the relay log of the standby node is stored in the storage device associated with the standby node is used below for description. FIG. 5 is a flowchart of a log synchronization method according to an embodiment of this application. As shown in FIG. 5, the method is performed by a database system. The database system includes an active node, a standby node, and a storage system. The storage system includes a first storage device and a second storage device. The method includes the following step 501 to step 507.

501. The active node stores a log in the first storage device, where the log indicates an operation performed by the active node, and the first storage device and the active node belong to a same region.

Step 501 is similar to step 201, and details are not described again.

502. The first storage device synchronizes the log of the active node to the second storage device, where the second storage device and the standby node belong to a same region.

The first storage device replicates the log of the active node periodically or at scheduled time, and sends the replicated log to the second storage device. Time between two adjacent log replications may be set based on an actual requirement. When the time between the two adjacent log replications is short, the second storage device can complete synchronization with the first storage device in a timely manner, to improve reliability and stability of the database system. In some embodiments, each time the active node stores the log in the storage system, the first storage device replicates an updated log and sends the updated log to the second storage device, to ensure real-time synchronization between the logs stored in the first storage device and the second storage device, so as to ensure that both the active node and the standby node can provide an online service for the outside. In other words, both the active node and the standby node are in an active-active mode.

It should be noted that step 502 is described by using an example in which the first storage device initiates log synchronization. In some embodiments, the second storage device initiates the log synchronization. The second storage device sends a synchronization request to the second storage device periodically or at scheduled time, and after receiving the synchronization request, the first storage device replicates the log, and sends the replicated log to the second storage device. In some other embodiments, when the standby node sends a log synchronization request to the second storage device, the second storage device sends a synchronization request to the first storage device, to synchronize the log that is of the active node and that is stored in the first storage device. This can ensure that the standby node receives a latest differential log each time, to improve effectiveness of the log synchronization.

503. The standby node sends the log synchronization request to the second storage device.

504. The second storage device receives the log synchronization request sent by the standby node, and generates a differential log based on the log synchronization request of the standby node and the log of the active node, where the differential log indicates an operation not performed by the standby node.

505. The second storage device sends the differential log to the standby node.

506. The standby node receives the differential log.

507. The standby node writes the differential log into a relay log that is of the standby node and that is stored in the second storage device.

Step 503 to step 507 are similar to step 202 to step 206, and details are not described again.

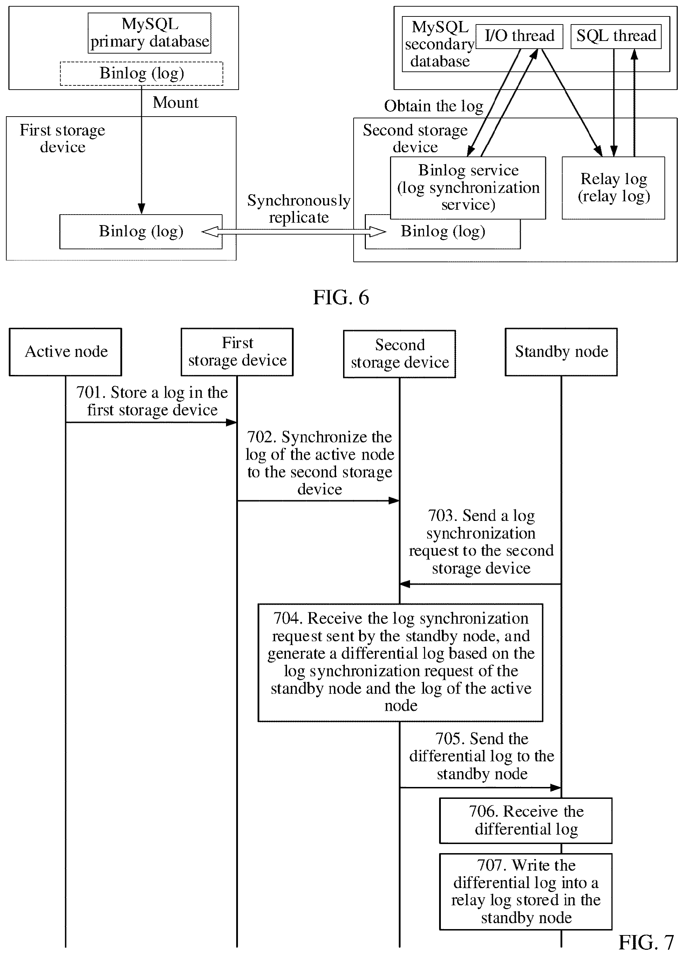

The following describes the process shown in step 501 to step 506 by using FIG. 6 as an example. FIG. 6 is a diagram of a log synchronization method according to an embodiment of this application. As shown in FIG. 6, a MySQL primary database is run on an active node, a MySQL secondary database is run on a standby node. The active node and a first storage device belong to a same region, and the standby node and a second storage device belong to a same region. The active node writes a log (binlog) into the first storage device, and the first storage device and the second storage device perform log synchronization. The second storage device can provide a log synchronization service (binlog service). The standby node sends a log synchronization request to the second storage device through an I/O thread, to obtain a differential log, and writes the obtained differential log into a relay log (relay log) in the second storage device. The standby node reads the differential log from the relay log through an SQL thread and replays the read differential log, to synchronize an operation performed by the active node. It should be noted that the MySQL database in FIG. 3 is merely an example. The log synchronization method provided in this embodiment of this application is also applicable to any database such as openGauss and PostgreSQL. This is not limited in embodiments of this application.

In the foregoing method, the log of the active node is stored by the storage device that belongs to the same region as the active node, so that efficiency of storing the log in the storage device by the active node can be improved, a storage delay and a data loss caused by long-distance data transmission are avoided, and the log of the active node can be stored in a timely manner. In addition, the standby node sends the log synchronization request to the storage device that belongs to the same region as the standby node, so that transmission time of the request can be reduced, to improve efficiency of the log synchronization. In this way, the standby node can complete the log synchronization in a timely manner, to help improve reliability and a disaster recovery capability of the database system. In addition, because the relay log of the standby node is stored in the storage system, storage resources of the standby node can be saved. In addition, because the storage system has high reliability, a possibility of a data damage or loss is low when the relay log is stored in the storage system, and reliability of the log synchronization and stability of the database system can be improved.

An example in which the active node and the standby node do not belong to a same region and the relay log of the standby node is stored locally in the device is used below for description. FIG. 7 is a flowchart of a log synchronization method according to an embodiment of this application. As shown in FIG. 7, the method is performed by a database system. The database system includes an active node, a standby node, and a storage system. The storage system includes a first storage device and a second storage device. The method includes the following step 701 to step 707.

701. The active node stores a log in the first storage device, where the log indicates an operation performed by the active node, and the first storage device and the active node belong to a same region.

702. The first storage device synchronizes the log of the active node to the second storage device.

703. The standby node sends a log synchronization request to the second storage device, where the standby node and the second storage device belong to a same region.

704. The second storage device receives the log synchronization request sent by the standby node, and generates a differential log based on the log synchronization request of the standby node and the log of the active node, where the differential log indicates an operation not performed by the standby node.

705. The second storage device sends the differential log to the standby node.

706. The standby node receives the differential log.

707. The standby node writes the differential log into a relay log stored in the standby node.

Step 701 to step 707 are similar to step 501 to step 507. A difference lies in that in step 707, the relay log of the standby node is stored in the standby node, and similarities are not described again.

In the foregoing method, the log of the active node is stored by the storage device that belongs to the same region as the active node, so that efficiency of storing the log in the storage device by the active node can be improved, a storage delay and a data loss caused by long-distance data transmission are avoided, and the log of the active node can be stored in a timely manner. In addition, the standby node sends the log synchronization request to the storage device that belongs to the same region as the standby node, so that transmission time of the request can be reduced, to improve efficiency of the log synchronization. In this way, the standby node can complete the log synchronization in a timely manner, to help improve reliability and a disaster recovery capability of the database system. In addition, because the relay log of the standby node is stored in the standby node, efficiency of reading the differential log by the standby node from the relay log can be improved, to reduce a delay of synchronization between the active node and the standby node, and improve efficiency of the synchronization between the active node and the standby node.

It should be noted that the foregoing embodiments shown in FIG. 2 and FIG. 4 are described by using examples in which the active node and the standby node belong to a same region, in other words, a single-AZ active/standby mode is used by the active node and the standby node for networking, and the foregoing embodiments shown in FIG. 5 and FIG. 7 are described by using examples in which the active node and the standby node belong to different regions, in other words, a cross-AZ disaster recovery mode is used by the active node and the standby node for networking. In some embodiments, a hybrid mode is used by the active node and the standby node for networking, in other words, the active node and a part of the standby node belong to a same region, and the active node and a part of the standby node do not belong to a same region. In this scenario, log synchronization between the active node and the standby node is a combination of the log synchronization in the foregoing two scenarios. A specific process is the same as that in the foregoing embodiments, and details are not described again.

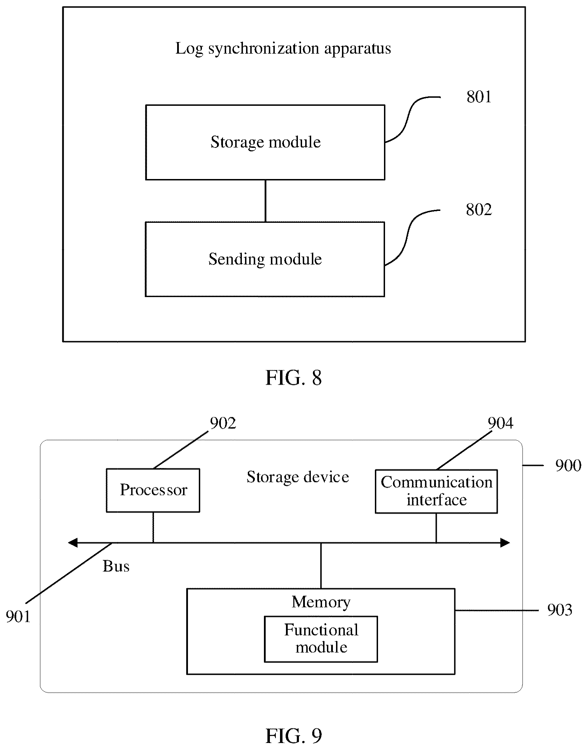

FIG. 8 is a block diagram of a structure of a log synchronization apparatus according to an embodiment of this application. The apparatus is used in a storage system in a database system. The database system includes an active node, a standby node, and a storage system. The apparatus includes a storage module 801 and a sending module 802.

The storage module 801 is configured to store a log of the active node, where the log indicates an operation performed by the active node.

The sending module 802 is configured to: receive a log synchronization request from the standby node, generate a differential log based on the log synchronization request and the log, and send the differential log to the standby node, where the differential log indicates an operation not performed by the standby node.

Optionally, the storage system includes a first storage device and a second storage device that belong to different regions. The storage module 801 is configured to:
store the log in the first storage device, and perform log synchronization between the first storage device and the second storage device.

Optionally, the standby node and the second storage device belong to a same region. The sending module 802 is used in the second storage device and includes:
a receiving unit, configured to receive the log synchronization request from the standby node;
a generating unit, configured to generate the differential log based on the log synchronization request and the log; and
a sending unit, configured to send the differential log to the standby node.

Optionally, the apparatus is further configured to:
write the differential log into a relay log of the standby node based on a write operation of the standby node on the differential log.

Optionally, the apparatus is further used in the active node, and is configured to:
store the log in the storage system.

Optionally, the apparatus is further used in the standby node, and is configured to perform any one of the following:
receiving the differential log, and writing the differential log into a relay log stored in the standby node; or
receiving the differential log, and writing the differential log into a relay log that is of the standby node and that is stored in the storage system.

Both the storage module 801 and the sending module 802 may be implemented by using software, or may be implemented by using hardware. The following describes an implementation of the sending module 802 by using the sending module 802 as an example. Similarly, for an implementation of the storage module 801, refer to the implementation of the sending module 802.

The module is used as an example of a software functional unit, and the sending module 802 may include code run on a computing instance. The computing instance may include at least one of a physical host (computing device), a virtual machine, and a container. Further, there may be one or more computing instances. For example, the sending module 802 may include code run on a plurality of hosts/virtual machines/containers. It should be noted that the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed in a same virtual private cloud (virtual private cloud, VPC), or may be distributed in a plurality of VPCs. Generally, one VPC is set in one region. A communication gateway needs to be disposed in each VPC for communication between two VPCs in a same region or cross-region communication between VPCs in different regions. An interconnection between VPCs is implemented through the communication gateway.

The module is used as an example of a hardware functional unit, and the sending module 802 may include at least one computing device, for example, a server. Alternatively, the sending module 802 may be a device implemented by using an application-specific integrated circuit (application-specific integrated circuit, ASIC), a programmable logic device (programmable logic device, PLD), or the like. The PLD may be implemented by a complex programmable logic device (complex programmable logical device, CPLD), a field programmable gate array (field programmable gate array, FPGA), generic array logic (generic array logic, GAL), or any combination thereof.

A plurality of computing devices included in the sending module 802 may be distributed in a same region, or may be distributed in different regions. The plurality of computing devices included in the sending module 802 may be distributed in a same AZ, or may be distributed in different AZs. Similarly, a plurality of computing devices included in the storage module 801 may be distributed in a same VPC, or may be distributed in a plurality of VPCs. The plurality of computing devices may be any combination of computing devices such as a server, an ASIC, a PLD, a CPLD, an FPGA, and GAL.

It should be noted that, in another embodiment, steps that the foregoing modules are responsible for implementing may be specified as required, and all functions of the foregoing apparatus are implemented by separately implementing different steps in the log synchronization method by using the foregoing modules. In other words, when the log synchronization apparatus provided in the foregoing embodiments implements the log synchronization method, division into the foregoing functional modules is merely used as an example for description. During actual application, the foregoing functions may be allocated to different functional modules for implementation as required. In other words, an internal structure of the apparatus is divided into different functional modules to implement all or some of the foregoing functions. In addition, the apparatus provided in the foregoing embodiment and the corresponding method embodiments belong to a same concept. For a specific implementation process thereof, refer to the method embodiments. Details are not described herein again.

This application further provides a storage device 900. FIG. 9 is a diagram of a structure of a storage device according to an embodiment of this application. As shown in FIG. 9, the storage device 900 includes a bus 901, a processor 902, a memory 903, and a communication interface 904. The processor 902, the memory 903, and the communication interface 904 communicate with each other through the bus 901. The storage device 900 may be a server or a terminal device. It should be understood that quantities of processors and memories in the storage device 900 are not limited in this application.

The bus 901 may be a peripheral component interconnect (peripheral component interconnect, PCI) bus, an extended industry standard architecture (extended industry standard architecture, EISA) bus, or the like. The bus may include an address bus, a data bus, a control bus, and the like. For ease of representation, the bus is represented by using only one line in FIG. 9. However, this does not indicate that there is only one bus or only one type of bus. The bus 901 may include a path for information transmission between various components (for example, the memory 903, the processor 902, and the communication interface 904) of the storage device 900.

The processor 902 may include any one or more of processors such as a central processing unit (central processing unit, CPU), a graphics processing unit (graphics processing unit, GPU), a micro processor (MP), or a digital signal processor (DSP).

The memory 903 may include a volatile memory (volatile memory, VM), for example, a random access memory (random access memory, RAM). The memory 903 may further include a non-volatile memory (non-volatile memory, NVM), for example, a read-only memory (read-only memory, ROM), a flash memory, a hard disk drive (hard disk drive, HDD), or a solid-state drive (solid-state drive, SSD).

The memory 903 stores executable program code, and the processor 902 executes the executable program code to separately implement functions of the foregoing storage module 801 and sending module 802, so as to implement a log synchronization method. In other words, the memory 903 stores instructions for performing the log synchronization method.

Alternatively, the memory 903 stores executable program code, and the processor 902 executes the executable program code to separately implement functions of the foregoing storage module 801 and sending module 802, so as to implement a log synchronization method. In other words, the memory 903 stores instructions for performing the log synchronization method.

The communication interface 904 is a transceiver module, for example, but not limited to, a network interface card or a transceiver, to implement communication between the storage device 900 and another device or a communication network.

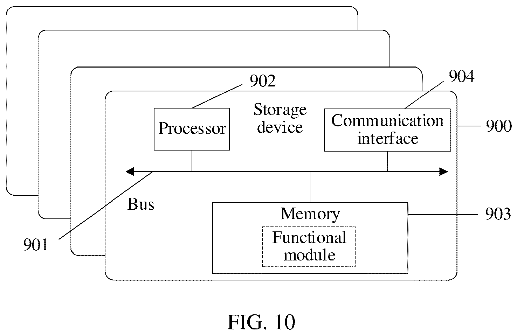

An embodiment of this application further provides a storage system. FIG. 10 is a diagram of a storage system according to an embodiment of this application. As shown in FIG. 10, the storage system includes at least one storage device 900. A memory 903 in one or more storage devices 900 in the storage system may store same instructions for performing a log synchronization method.

In some possible implementations, the memory 903 in the one or more storage devices 900 in the storage system may alternatively separately store some instructions for performing the log synchronization method. In other words, a combination of the one or more storage devices 900 may jointly execute instructions for performing the log synchronization method.

It should be noted that memories 903 in different storage devices 900 in the storage system may store different instructions respectively for some functions of a log synchronization apparatus. In other words, instructions stored in the memories 903 in different storage devices 900 may implement functions of one or more of the sending module 801 and the storage module 802.

It should be understood that functions of the storage device 900 shown in FIG. 10 may alternatively be implemented by a plurality of storage devices 900.

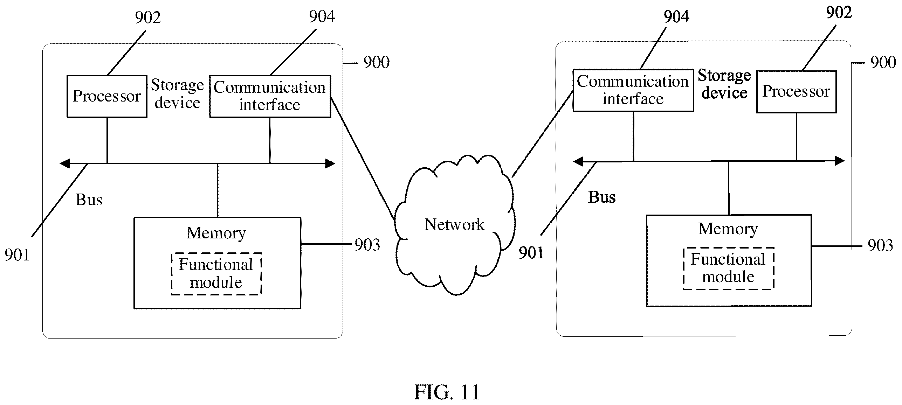

In some possible implementations, the one or more storage devices in the storage system may be connected through a network. The network may be a wide area network, a local area network, or the like. FIG. 11 shows a possible implementation. FIG. 11 is a diagram of a possible implementation of a storage system according to an embodiment of this application. As shown in FIG. 11, two storage devices 900 are connected through a network. Specifically, each storage device is connected to the network through a communication interface of the storage device.

An embodiment of this application further provides another storage system. For a connection relationship between storage devices in the storage system, refer to the connection manner in FIG. 10 or FIG. 11. A difference lies in that a memory 903 in one or more storage devices 900 in the storage system may store same instructions for performing a log synchronization method.

In some possible implementations, the memory 903 in the one or more storage devices 900 in the storage system may alternatively separately store some instructions for performing the log synchronization method. In other words, a combination of the one or more storage devices 900 may jointly execute instructions for performing the log synchronization method.

It should be noted that the memories 903 in different storage devices 900 in the storage system may store different instructions respectively for performing some functions of a log synchronization apparatus. In other words, instructions stored in the memories 903 in different storage devices 900 may implement functions of one or more of the storage module 801 and the sending module 802.

An embodiment of this application provides an electronic device. The electronic device includes a processor and a memory. The processor is configured to execute instructions stored in the memory, to enable the electronic device to perform the steps performed by the active node or the steps performed by the standby node in the log synchronization method provided in the foregoing embodiments.

An embodiment of this application provides a computer program product including instructions. The computer program product may be software or a program product that includes instructions and that can run on an electronic device or that is stored in any usable medium. When the computer program product runs on the electronic device, the electronic device is enabled to perform the steps performed by the storage system, or the steps performed by the active node, or the steps performed by the standby node in the log synchronization method provided in the foregoing embodiments.

An embodiment of this application provides a computer-readable storage medium. The computer-readable storage medium may be any usable medium that can be stored by a computing device, or a data storage device, for example, a data center including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions. When the instructions are executed by an electronic device, the electronic device performs the steps performed by the storage system, or the steps performed by the active node, or the steps performed by the standby node in the log synchronization method provided in the foregoing embodiments.

It should be noted that information (including but not limited to user equipment information, personal information of a user, and the like), data (including but not limited to data used for analysis, stored data, displayed data, and the like), and signals in this application are used under authorization by user or full authorization by all parties, and capturing, use, and processing of related data need to conform to related laws, regulations, and standards of related countries and regions. For example, the log in this application is obtained under full authorization.

A person of ordinary skill in the art may be aware that, in combination with the examples described in embodiments disclosed in this specification, method steps and units may be implemented by using electronic hardware, computer software, or a combination thereof. To clearly describe the interchangeability between the hardware and the software, the foregoing has generally described steps and compositions of each embodiment according to functions. Whether the functions are performed by using hardware or software depends on particular applications and design constraint conditions of the technical solutions. A person of ordinary skill in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing described system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments in this application.

In addition, functional units in embodiments of this application may be integrated into one processing unit, each of the units may exist alone physically, or two or more units are integrated into one unit. The integrated unit may be implemented in a form of hardware, or may be implemented in a form of a software unit.

When the integrated unit is implemented in a form of a software functional unit and sold or used as an independent product, the integrated unit may be stored in a computer-readable storage medium. Based on such an understanding, the technical solutions of this application essentially, a part contributing to conventional technologies, or all or some of the technical solutions may be implemented in a form of a software product. The computer software product is stored in a storage medium, and includes several instructions for instructing a computing device (which may be a personal computer, a server, a computing device, or the like) to perform all or some of the steps of the method described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

In this application, terms such as "first" and "second" are used to distinguish between same items or similar items with basically same roles and functions. It should be understood that there is no logical or sequential dependency between "first", "second", and "n^{th}", and neither a quantity nor an execution sequence is limited. It should be further understood that although the following descriptions use terms such as "first" and "second" to describe various elements, these elements should not be limited by the terms. These terms are simply used to distinguish one element from another. For example, without departing from the scope of the various examples, the first storage device may be referred to as the second storage device, and similarly, the second storage device may be referred to as the first storage device. Both the first storage device and the second storage device may be storage devices, and in some cases, may be separate and different storage devices.

The term "at least one" in this application means one or more, and the term "plurality of" in this application means two or more. For example, a plurality of standby nodes means two or more standby nodes. The terms "system" and "network" are often used interchangeably in this specification.

It should be further understood that the term "if" may be interpreted as "when" ("when" or "upon"), "in response to determining", or "in response to detecting". Similarly, depending on the context, the expression "if determining..." or "if [the stated condition or event] is detected" may be interpreted as "when it is determined that...", "in response to determining...", "when [the stated condition or event] is detected", or "in response to detecting [the stated condition or event]".

The foregoing descriptions are merely specific implementations of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

All or some of the foregoing embodiments may be implemented by using software, hardware, firmware, or any combination thereof. When software is used to implement the foregoing embodiments, all or some of the foregoing embodiments may be implemented in a form of a computer program product. The computer program product includes one or more computer program instructions. When the computer program instructions are loaded and executed on a computer, the procedures or functions according to embodiments of this application are all or partially generated. The computer may be a general-purpose computer, a dedicated computer, a computer network, or another programmable apparatus.

The computer instructions may be stored in a computer-readable storage medium or may be transmitted from a computer-readable storage medium to another computer-readable storage medium. For example, the computer program instructions may be transmitted from a website, computer, server, or data center to another website, computer, server, or data center in a wired or wireless manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive), or the like.

A person of ordinary skill in the art may understand that all or some of the steps of embodiments may be implemented by using hardware or a program instructing related hardware. The program may be stored in a computer-readable storage medium. The storage medium may be a read-only memory, a magnetic disk, an optical disc, or the like.

The foregoing embodiments are merely intended for describing the technical solutions of this application, but not for limiting this application. Although this application is described in detail with reference to the foregoing embodiments, a person of ordinary skill in the art should understand that modifications may still be made to the technical solutions described in the foregoing embodiments or equivalent replacements may still be made to some technical features thereof, and such modifications or replacements do not cause the essence of the corresponding technical solutions to depart from the scope of the technical solutions in embodiments of this application.

## Claims

1. A log synchronization method, performed by a storage system in a database system, wherein the database system comprises an active node, a standby node, and the storage system, and the method comprises:
storing, by the storage system, a log of the active node, wherein the log indicates an operation performed by the active node; and
receiving, by the storage system, a log synchronization request from the standby node, generating a differential log based on the log synchronization request and the log, and sending the differential log to the standby node, wherein the differential log indicates an operation not performed by the standby node.

2. The method according to claim 1, wherein the storage system comprises a first storage device and a second storage device that belong to different regions, and storing, by the storage system, the log of the active node comprises:
storing, by the first storage device, the log, and performing, by the first storage device and the second storage device, log synchronization.

3. The method according to claim 2, wherein the standby node and the second storage device belong to a same region, and receiving, by the storage system, the log synchronization request from the standby node, generating the differential log based on the log synchronization request and the log, and sending the differential log to the standby node comprises:
receiving, by the second storage device, the log synchronization request from the standby node, generating the differential log based on the log synchronization request and the log, and sending the differential log to the standby node.

4. The method according to claim 1, wherein the method further comprises:
writing, by the storage system, the differential log into a relay log of the standby node based on a write operation of the standby node on the differential log.

5. The method according to claim 1, wherein the method further comprises:
storing, by the active node, the log in the storage system.

6. The method according to claim 1, wherein the method further comprises any one of the following manners:
receiving, by the standby node, the differential log, and writing the differential log into a relay log stored in the standby node; or
receiving, by the standby node, the differential log, and writing the differential log into a relay log of the standby node that is stored in the storage system.

7. A log synchronization apparatus, used in a storage system in a database system, wherein the database system comprises an active node, a standby node, and the storage system, and the apparatus comprises:
a storage module, configured to store a log of the active node, wherein the log indicates an operation performed by the active node; and
a sending module, configured to: receive, by the storage system, a log synchronization request from the standby node, generate a differential log based on the log synchronization request and the log, and send the differential log to the standby node, wherein the differential log indicates an operation not performed by the standby node.

8. A storage device, wherein the storage device comprises a memory and a processor; and
the processor is configured to execute instructions stored in the memory, to enable the storage device to perform the log synchronization method according to any one of claims 1 to 4.

9. A storage system, wherein the storage system comprises at least one storage device, and each storage device comprises a memory and a processor; and
the processor of the at least one storage device is configured to execute instructions stored in the memory of the at least one storage device, to enable the storage system to perform the log synchronization method according to any one of claims 1 to 4.

10. An electronic device, wherein the electronic device comprises a processor and a memory; and
the processor is configured to execute instructions stored in the memory, to enable the electronic device to perform the log synchronization method according to claim 5 or 6.

11. A computer program product comprising instructions, wherein when the instructions are run by a storage device, the storage device is enabled to perform the log synchronization method according to any one of claims 1 to 4, or when the instructions are run by a storage system, the storage system is enabled to perform the log synchronization method according to any one of claims 1 to 4.

12. A computer program product comprising instructions, wherein when the instructions are run by a processor of an electronic device, the electronic device is enabled to perform the log synchronization method according to claim 5 or 6.

13. A computer-readable storage medium, comprising computer program instructions, wherein when the computer program instructions are executed by a storage device, the storage device is enabled to perform the log synchronization method according to any one of claims 1 to 4, or when the computer program instructions are executed by a storage system, the storage system is enabled to perform the log synchronization method according to any one of claims 1 to 4.

14. A computer-readable storage medium, comprising computer program instructions, wherein when the computer program instructions are executed by an electronic device, the electronic device is enabled to perform the log synchronization method according to claim 5 or 6.
